# EUROPEAN PATENT SPECIFICATION

(11) **EP 1 763 182 B1**
(45) Date of publication and mention of the grant of the patent: **19.03.2008**
(21) Application number: 05108270.9
(22) Date of filing: 08.09.2005
(51) Int. Cl.: H04L 12/56, H04M 1/725

(54) **Alerting a smart card reader of probable wireless communication**
Warnen eines Smart-Card-Lesers vor einer möglichen drahtlosen Funkverbindung
Alerte d'un lecteur de carte à puce d'une communication sans fil probable

(43) Date of publication of application: 14.03.2007
(73) Proprietor: Research In Motion Limited, Waterloo, Ontario N2L 3W8 (CA)
(72) Inventor: Adams, Neil, N2K 4E4, Waterloo (CA); Little, Herb, N2T 2V8, Waterloo (CA)
(74) Representative: Rickard, David John

(56) References cited:
- WO-A-02/21867
- US-A1- 2004 259 542
- BLUETOOTH SPECIAL INTEREST GROUP: "SIM access profile, interoperability specification" BLUETOOTH SPECIFICATION, 6 June 2002 (2002-06-06), pages 1-50, XP002314566

## Description

Bluetooth® is a technology for low-power, low-bandwidth wireless connections between devices. Connected devices form a small network known as a piconet, with a master device and one or more slave devices. In *Active Mode,* a Bluetooth® device (BT device) participates actively on the transmission channel. The Bluetooth® core specifications v1.1, published February 22, 2001 by the Bluetooth® special interest group (SIG) and the Bluetooth® core specifications v1.2, published November 5, 2003, include provisions for three low-power modes to conserve battery life. These modes, in decreasing order of power requirements, are *Sniff Mode, Hold Mode,* and *Park Mode.*

While in the *Sniff Mode,* the device listens to the piconet at a reduced rate, related to three parameters: *Sniff Interval, Sniff Attempt* and *Sniff Timeout.* These parameters are programmable, providing flexibility for different applications. The *Hold Mode* is similar to the *Park Mode,* except that the device retains its *Active Member Address,* which distinguishes the device from other devices in the piconet. In the *Park Mode,* the device does not participate at all in the piconet, although the device's clock continues to run and remains synchronized to the master device.

If a user of a first device wants the first device to communicate wirelessly with a second device that is in *Sniff Mode,* the communications therebetween will be delayed until the second device has listened to the piconet during a *Sniff Interval* and has transitioned from *Sniff Mode* to *Active Mode.* For example, it may take the second device around 2 seconds to transition from *Sniff Mode* to *Active Mode.* In a situation where communication with the second device tends to happen in short bursts of about 2 to 5 seconds duration, the delay incurred by transitioning from *Sniff Mode* to *Active Mode* may cause the second device to appear sluggish to user-initiated activity.

Similar concerns may arise with devices compatible with other wireless communication protocols, a non-exhaustive list of examples for which includes ZigBee™, radio frequency identification (RFID), ultra wideband (UWB), IEEE 802.11 and various proprietary communication protocols.

WO02/21867 discloses a wireless device that may request a server to power the device SIM on, i.e. to apply a supply voltage and clock signal to the SIM. This command is not necessary to prepare the server to be ready for communication of data from the wireless device, since the SIM may already be powered on. Moreover, this command, by itself, is insufficient to prepare the server to be ready for communication of data from the wireless device.

US2004/259942 discloses power-saving methods in a wireless device. It discloses that, as it is important regarding power saving to keep a short range wireless communication, such as wireless local area network (WLAN) or Bluetooth, power consumption of a battery operated terminal or device as low as possible particularly when features utilizing said wireless communication are not in use, then it is possible on the basis of the usage level of such features to control a degree of a wireless communication power save mode. When it is assumable that no applications utilizing said wireless communication are in use the terminal is switched into deeper power save mode.

### GENERAL

In summary, in the invention a wireless device may alert a wireless smart card reader that communication of data between the wireless device and the wireless smart card reader is probably imminent by sending an activation alert. Upon receipt of the activation alert, if the wireless smart card reader is in a low-power state, the wireless smart card reader may enter a higher-power state. If the wireless smart card reader is in the higher-power state upon receipt of the activation alert, the wireless smart card reader may remain in the higher-power state until a timeout period has expired. The wireless device may instruct the wireless smart card reader to enter the low-power state by sending a deactivation alert if the wireless device identifies that communication of data between the wireless device and the wireless smart card reader is not likely to occur within a specified period of time.

In one main aspect, the invention provides a method for improving responsiveness of a wireless smart card reader, the method comprising: detecting at a wireless device one or more conditions that indicate that communication of data between said wireless device and said wireless smart card reader over a wireless communication link is imminent; and having said wireless device send an activation alert over said link to said wireless smart card reader to instruct said wireless smart card reader to be ready for said communication.

In another main aspect, the invention provides a method for enabling a wireless smart card reader to conserve battery power, the method comprising: detecting at a wireless device one or more conditions that indicate that communication of data between said wireless device and said wireless smart card reader over a wireless communication link is not likely to occur within a specified period of time; and having said wireless device send a deactivation alert over said link to said wireless smart card reader to instruct said wireless smart card reader to enter a low-power mode.

In yet another main aspect, the invention provides a method for readying a wireless smart card reader to receive imminent communication of data, the method comprising: receiving an activation alert from a wireless device; and upon receipt of said activation alert by said wireless smart card reader, entering a higher-power state in said wireless smart card reader for the duration of a timeout period if said wireless smart card reader is in a low-power state and otherwise not entering said low-power state in said wireless smart card reader (102) at least until said timeout period has expired. Other aspects of the invention will be apparent from the appended claims.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is an illustration of an exemplary communications system, according to some embodiments;

Figure 2 is a flowchart of an exemplary method to be implemented in a wireless device, according to some embodiments;

Figure 3 is a flowchart of another exemplary method to be implemented in a wireless device, according to some embodiments;

Figure 4 is a flowchart of an exemplary effect of an activation alert on a smart card reader, according to some embodiments; and

Figure 5 is a block diagram of the exemplary communications system of Figure 1, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

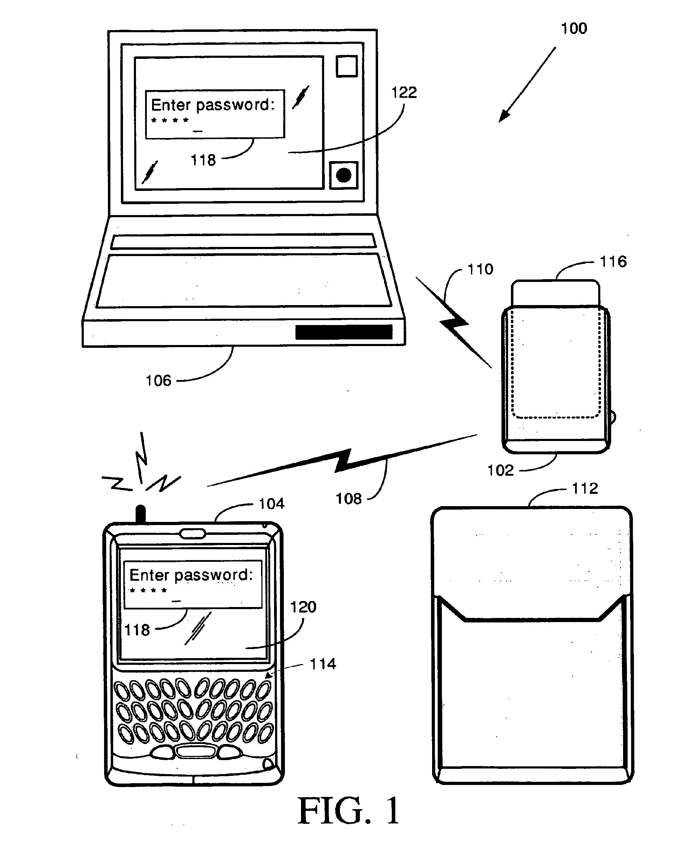

Figure 1 is a schematic diagram of an exemplary system, according to some embodiments of the invention. A system 100 includes a wireless smart card reader 102, a mobile device 104, and a wireless-enabled personal computer 106. Smart card reader 102 and mobile device 104 are able to communicate over a wireless communication link 108. Smart card reader 102 and personal computer 106 are able to communication over a wireless communication link 110.

Mobile device 104 has a carrying case 112. The mechanical features of mobile device 104 and carrying case 112, as shown in Figure 1, are exemplary, and mobile devices and carrying cases having different mechanical features are also contemplated. For example, mobile device 104 is shown as able to be inserted into carrying case 112; however, other means for securing a mobile device and a carrying case are also contemplated. When mobile device 104 is secured to carrying case 112, a user of mobile device 104 is unable to provide input to mobile device 104 using a keyboard 114.

A smart card 116 is shown inserted into smart card reader 102. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 116 may use smart card reader 102 for identification, to unlock mobile device 104 and/or personal computer 106, and to digitally sign and/or decrypt messages sent by mobile device 104 and/or personal computer 106. Smart card 116 may also include a random number generator.

When mobile device 104 is removed from carrying case 112, or when mobile device 104 has not been in use for a predefined period of time, the user may be presented with a password dialog 118 on a display 120 of mobile device 104. Upon entry of the correct password, mobile device 104 may become unlocked. Alternatively, if a two-factor authentication scheme involving smart card reader 102 is used, mobile device 104 requests two passwords from the user, one password to unlock mobile device 104, and one password to unlock smart card reader 102. These passwords may be the same. Mobile device 104 may send the smart card reader password to smart card reader 102 in a login request, and smart card reader 102 may indicate to mobile device 104 whether the smart card reader password is correct. As an additional measure, mobile device 104 may check whether the correct smart card is inserted in smart card reader 102 by checking a unique identifier of smart card 116, for example, its serial number. If smart card 116 is the correct smart card and the user of mobile device 104 has provided the correct smart card reader password, then smart card reader 102 is unlocked.

Similarly, when personal computer 106 has not been in use for a predefined period of time, or when a user logs on to personal computer 106, the user may be presented with password dialog 118 on a display 122 of personal computer 106. Upon entry of the correct password, personal computer 106 may become unlocked.

Smart card reader 102 may be able to enter one or more low-power modes in order to conserve battery power. The time required for smart card reader 102 to transition from a low-power mode to a higher-power mode may increase the response time of smart card reader 102 to user-initiated activity.

For example, if smart card reader 102 is a BT device, the low-power mode may be *Sniff Mode* and the higher-power mode may be *Active Mode.* If smart card reader 102 is a master in the piconet, then the transition from *Sniff Mode* to *Active Mode* may inlude a transition from *Sniff Mode* to *Sniff Transition Mode* and a transition from *Sniff Transition Mode* to *Active Mode.*

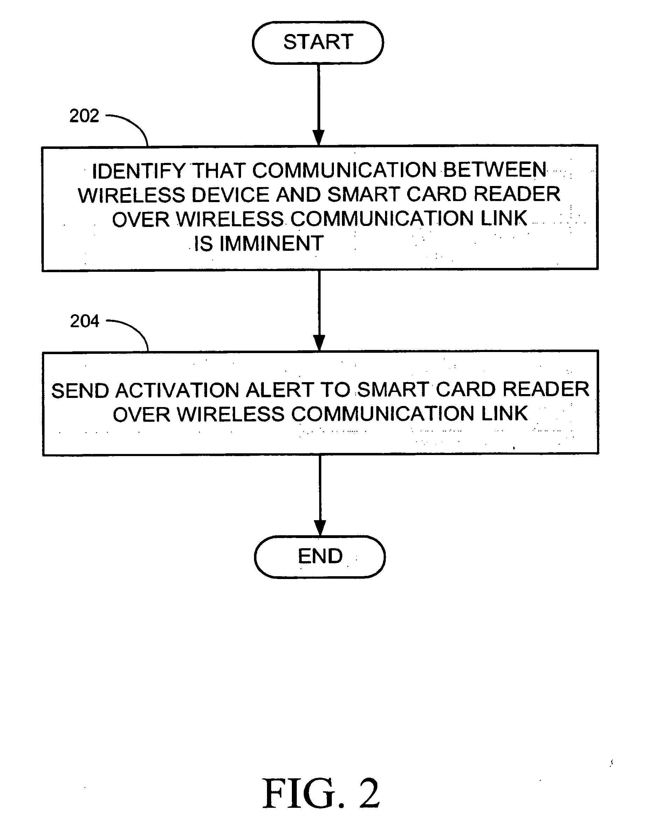

Figure 2 is a flowchart of an exemplary method to be implemented by a wireless device that is able to communicate with smart card reader 102, according to some embodiments. For example, this wireless device may be mobile device 104 and/or personal computer 106. At 202, the device may identify that communication of data between the device and smart card reader 102 is probably imminent. At 204, the device may therefore send an activation alert to smart card reader 102.

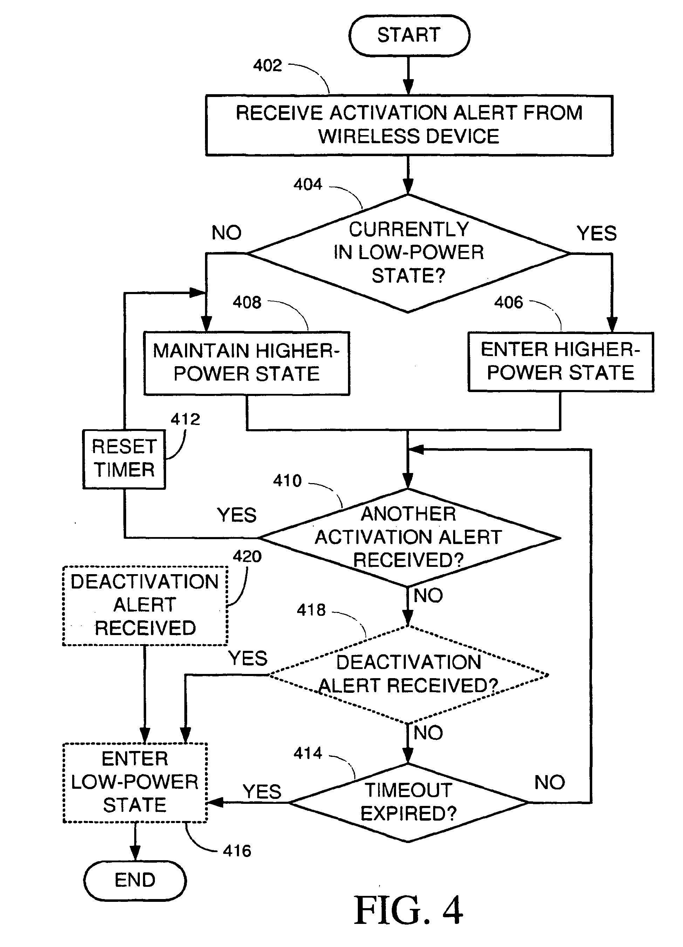

If smart card reader 102 is in a low-power mode yet periodically awakens in order to listen to the transmission channel, smart card reader 102 will receive the activation alert. Upon receipt of the activation alert, smart card reader 102 may transition into a higher-power mode in order to be prepared to receive subsequent communications from the device. This is described in further detail below with respect to Figure 4.

The device, for example, mobile device 104 or personal computer 106, may send the alert in the background while the user is doing some other operation. Therefore, from the user's perspective, smart card reader 102 may appear to be available for communication of data as soon as needed by the user.

A non-exhaustive list of conditions that may trigger the device to send the activation alert includes:

**(1) The device is unlocked.** When the user unlocks the device, the probability that the user is going to access smart card reader 102 increases greatly. Upon being unlocked, the device may begin to receive encrypted messages that require communication with smart card reader 102 for the purpose of decryption. Similarly, upon being unlocked, the device may begin to send encrypted messages that require communication with smart card reader 102 for the purpose of adding a digital signature.

**(2) Mobile device 104 is removed from carrying case 112.** If smart card reader 102 is used for two-factor authentication, then mobile device 104 must communicate with smart card reader 102 in order for the user to unlock mobile device 104. Having mobile device 104 send the activation alert to smart card reader 102 upon being removed from carrying case 112 increases the likelihood that smart card reader 102 will be active in time to respond to communication from mobile device 104 for the unlocking of mobile device 104.

**(3) User starts to compose an e-mail message.** Once the user has finished composing the e-mail message, adding a digital signature to the e-mail message will require communication with smart card reader 102. Having the device send the activation alert to smart card reader 102 when the user starts to compose the e-mail message increases the likelihood that smart card reader 102 will be active by the time the user sends the e-mail message.

**(4) Password dialog is displayed on device to user.** If a two-factor authentication scheme involving smart card reader 102 is used to unlock the device, then once the user types the password in the password dialog and presses enter (or any other equivalent user input), the device will initiate communication with smart card reader 102 for the additional factor of the authentication scheme. Having the device send the activation alert to smart card reader 102 when the password dialog is displayed on the device to the user increases the likelihood that smart card reader 102 will be active by the time the user finishes typing the password and pressing enter.

**(5) User begins typing password.** If a two-factor authentication scheme involving smart card reader 102 is used to unlock the device, then once the user types the password in the password dialog and presses enter (or any other equivalent user input), the device will initiate communication with smart card reader 102 for the additional factor of the authentication scheme. However, there may be a delay from the time the password dialog is displayed until the user actually types in the password and presses enter. Having the device send the activation alert to smart card reader 102 when the user begins typing the password enables smart card reader 102 to remain in a low-power state for a longer period of time, while still increasing the likelihood that smart card reader 102 will be active by the time the user finishes typing the password and pressing enter.

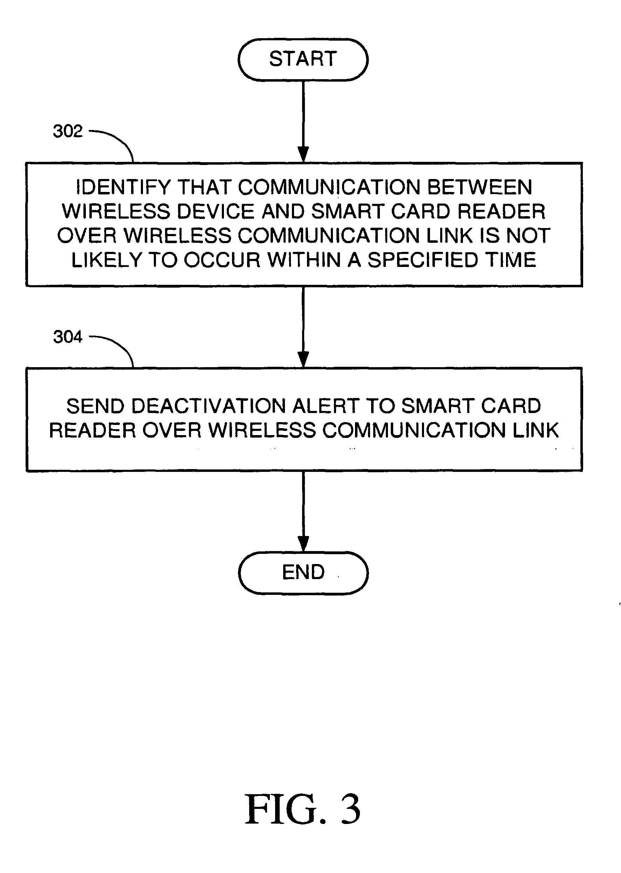

Figure 3 is a flowchart of another exemplary method to be implemented by a wireless device that is able to communicate with smart card reader 102, according to some embodiments. For example, this wireless device may be mobile device 104 and/or personal computer 106. At 302, the device may identify that communication of data between the device and smart card reader 102 is not likely to occur within a specified period of time. The specified period of time may be a configurable parameter. The specified period of time may be configurable, for example, through an information technology (IT) policy. At 304, the device may therefore send a deactivation alert to smart card reader 102.

Upon receipt of the deactivation alert, smart card reader 102 may transition into a low-power mode in order to conserve battery power. This is described in further detail below with respect to Figure 4.

A non-exhaustive list of conditions that may trigger the device to send the deactivation alert includes:

**(1) The device is locked.** When the device is locked, the likelihood that the user is going to access smart card reader 102 decreases greatly. Having the device send a deactivation alert to smart card reader 102 upon being locked (or just prior to being locked) may enable smart card reader 102 to transition into a low-power mode and conserve battery power.

**(2) Mobile device 104 is placed inside carrying case 112.** As explained above, when mobile device 104 is inside carrying case 112, a user of mobile device 104 is unable to provide input to mobile device 104 using a keyboard 114. Therefore, when mobile device 104 is inside carrying case 112, the likelihood that the user is going to access smart card reader 102 decreases greatly. Having mobile device 104 send the deactivation alert to smart card reader 102 upon being placed inside carrying case 112 may enable smart card reader 102 to transition into a low-power mode and conserve battery power.

The effect of the activation and deactivation alerts on smart card reader 102, according to some embodiments, is illustrated in Figure 4.

At 402, smart card reader 102 receives the activation alert from the device, for example, from mobile device 104 or from personal computer 106.

If smart card reader 102 is currently in a low-power state (checked at 404), then smart card reader 102 enters a higher-power state at 406, and otherwise, smart card reader 102 maintains the higher-power state at 408. For example, if smart card reader 102 is a BT device, smart card reader 102 may be in Sniff Mode when in the low-power state, and in Active Mode when in the higher-power state.

For the duration of a timeout period, smart card reader 102 checks at 410 whether it has received another activation alert (from any device). If so, smart card reader 102 resets the timer for the timeout period at 412, and the method continues from 408. Otherwise, once the timeout period has expired, which is checked at 414, smart card reader 102 may enter the low-power state at 416.

At any time, smart card reader 102 may receive a deactivation alert. If the deactivation alert is received within the timeout period following receipt of an activation alert, as at 418, then smart card reader 102 may enter the low-power state at 416 without waiting for the timeout period to expire. If the deactivation alert is received independently of an activation alert, as at 420, then smart card reader 102 may enter the low-power state at 416.

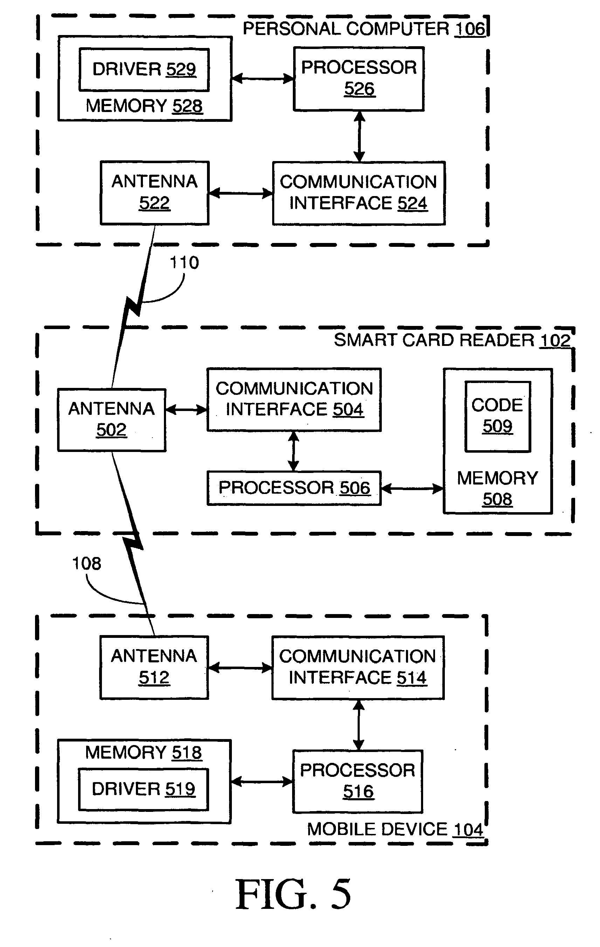

Figure 5 is a block diagram of system 100, according to some embodiments of the invention. For clarity, some components of smart card reader 102, mobile device 104, and personal computer 106 are not shown in Figure 5 and are not described explicitly below.

Smart card reader 102, mobile device 104 and personal computer 106 include antennae 502, 512, and 522, respectively. A non-exhaustive list of examples for antennae 502, 512 and 522 includes dipole antennae, monopole antennae, multilayer ceramic antennae, planar inverted-F antennae, loop antennae, shot antennae, dual antennae, omnidirectional antennae and any other suitable antennae.

Smart card reader 102, mobile device 104 and personal computer 106 include communication interfaces 504, 514, and 524, respectively, which are coupled to antennae 502, 512, and 522, respectively. A non-exhaustive list of examples of communication procotols with which communication interfaces 504, 514 and 524 may be compatible includes Bluetooth®, ZigBee™, radio frequency identification (RFID), ultra wideband (UWB), IEEE 802.11 and various proprietary communication protocols.

Smart card reader 102 also includes a processor 506 coupled to communication interface 504, and a memory 508 coupled to processor 506. Memory 508 may be fixed in or removable from smart card reader 102. Memory 508 may be embedded or partially embedded in processor 506. Processor 506 and memory 508 may be part of the same integrated circuit or in separate integrated circuits. Communication interface 504 and processor 506 may be part of the same integrated circuit or in separate integrated circuits.

Mobile device 104 also includes a processor 516 coupled to communication interface 514, and a memory 518 coupled to processor 516. Memory 518 may be fixed in or removable from mobile device 104. Memory 518 may be embedded or partially embedded in processor 516. Processor 516 and memory 518 may be part of the same integrated circuit or in separate integrated circuits. Communication interface 514 and processor 516 may be part of the same integrated circuit or in separate integrated circuits.

Personal computer 106 also includes a processor 526 coupled to communication interface 524, and a memory 528 coupled to processor 526. Memory 528 may be fixed in or removable from personal computer 106. Memory 528 may be embedded or partially embedded in processor 526. Processor 526 and memory 528 may be part of the same integrated circuit or in separate integrated circuits. Communication interface 524 and processor 526 may be part of the same integrated circuit or in separate integrated circuits.

A non-exhaustive list of examples for processors 506, 516 and 526 includes a central processing unit (CPU), a digital signal processor (DSP), a reduced instruction set computer (RISC), a complex instruction set computer (CISC) and the like. Furthermore, processors 506, 516 and 526 may each be part of an application specific integrated circuit (ASIC) or may each be part of an application specific standard product (ASSP).

A non-exhaustive list of examples for memories 506, 516 and 526 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Memories 518 and 528 may store respective drivers 519 and 529 for smart card reader 102. Drivers 519 and 529 may implement portions of the methods described above.

Memory 508 may store executable code 509 which, when executed by processor 506, may cause smart card reader 102 to implement portions of the methods described above.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for improving responsiveness of a wireless smart card reader (102), the method comprising:
detecting at a wireless device (104, 106) one or more conditions that indicate that communication of data between said wireless device (104, 106) and said wireless smart card reader (102) over a wireless communication link (108, 110) is imminent; and
having said wireless device (104, 106) send an activation alert over said link (108, 110) to said wireless smart card reader (102) to instruct said wireless smart card reader (102) to be ready for said communication.

2. The method of claim 1, wherein detecting said one or more conditions comprises:
detecting that a user has unlocked said wireless device (104, 106), and/or
detecting that a user has started to compose an electronic mail message on said wireless device (104, 106),
and/or
detecting that a password dialog (118) has been presented to said user on a display (120, 122) of said wireless device (104, 106),
and/or
detecting that a user has started to enter a password in a password dialog (118) presented to said user on a display (120, 122) of said wireless device (104, 106),
and/or
detecting that a user has removed said wireless device (104) from a carrying case (112) of said wireless device (104).

3. A method for enabling a wireless smart card reader (102) to conserve battery power, the method comprising:
detecting at a wireless device (104, 106) one or more conditions that indicate that communication of data between said wireless device (104, 106) and said wireless smart card reader (102) over a wireless communication link (108, 110) is not likely to occur within a specified period of time; and
having said wireless device (104, 106) send a deactivation alert over said link (108, 110) to said wireless smart card reader (102) to instruct said wireless smart card reader (102) to enter a low-power mode.

4. The method of claim 3, wherein detecting said one or more conditions comprises:
detecting that said wireless device (104, 106) has been locked or is about to be locked,
and/or
detecting that a user has secured said wireless device (104) to a carrying case (112) of said wireless device (104).

5. A method for readying a wireless smart card reader (102) to receive imminent communication of data, the method comprising:
receiving an activation alert from a wireless device (104, 106); and
upon receipt of said activation alert by said wireless smart card reader (102), entering a higher-power state in said wireless smart card reader (102) for the duration of a timeout period if said wireless smart card reader (102) is in a low-power state and otherwise not entering said low-power state in said wireless smart card reader (102) at least until said timeout period has expired.

6. The method of claim 5, wherein said wireless smart card reader (102) is a Bluetooth® device, said low-power state is *Sniff Mode,* and said higher-power state is *Active Mode.*

7. A device (104, 106) comprising:
a wireless communication interface (514, 524);
a processor (516, 526) coupled to said wireless communication interface (514, 524); and
a memory (518, 528) coupled to said processor (516, 526), said memory (518, 528) arranged to store executable code means (519, 529) which, when executed by said processor (516, 526), is arranged to detect one or more conditions that indicate that communication of data between said device (104, 106) and a wireless smart card reader (102) over a wireless communication link (108, 110) is imminent, and sends an activation alert to said wireless smart card reader (102) over said link (108, 110) via said wireless communication interface (514, 524) to instruct said wireless smart card reader (102) to be ready for said communication.

8. A smart card reader (102) comprising:
a wireless communication interface (504) through which said smart card reader (102) is able to receive an activation alert from a wireless device (104, 106);
a processor (506) coupled to said wireless communication interface (504); and
a memory (508) coupled to said processor (506), said memory arranged to store executable code means (509) which, when executed by said processor (506), is arranged to cause said smart card reader (102) to enter a higher-power state if said smart card reader (102) is in a low-power state upon receipt of said activation alert.

9. The smart card reader (102) of claim 8, wherein said wireless communication interface is compatible with a Bluetooth® communication protocol.

10. The smart card reader (102) of claim 9, wherein said low-power state is *Sniff Mode* and said higher-power state is *Active Mode.*

11. The smart card reader (102) of claim 8, wherein said wireless communication interface is compatible with a ZigBee™ communication protocol and/or a radio frequency identification (RFID) communication protocol and/or an ultra wideband (UWB) communication protocol and/or one or more IEEE 802.11 communication protocols.

12. A computer readable medium (518) embodying program code means which when executed by a processor (516) of a wireless computing device (104, 106) cause it to perform the method of claim 1 or claim 2 or the method of claim 3 or claim 4.

13. A computer readable medium (508) embodying program code means which when executed by a processor (506) of a smart card reader (102) cause it to perform the method of claim 5 or claim 6.

## Patentansprüche

1. Verfahren zur Optimierung der Ansprechempfindlichkeit eines drahtlosen Smartcard-Lesegeräts (102), wobei das Verfahren Folgendes umfasst:
Erfassen eines oder mehrerer Zustände bei einer drahtlosen Vorrichtung (104, 106), die anzeigen, dass eine Kommunikation von Daten zwischen der drahtlosen Vorrichtung (104, 106) und dem drahtlosen Smartcard-Lesegerät (102) über eine drahtlose Kommunikationsverbindung (108, 110) bevorsteht; und
Veranlassen, dass die drahtlose Vorrichtung (104, 106) über die Verbindung (108, 110) eine Aktivierungsmitteilung zu dem drahtlosen Smartcard-Lesegerät (102) sendet, um das drahtlose Smartcard-Lesegerät (102) anzuweisen, für die Kommunikation bereit zu sein.

2. Verfahren nach Anspruch 1, wobei das Erfassen des einen oder der mehreren Zustände Folgendes umfasst:
Erfassen, dass ein Benutzer die drahtlose Vorrichtung (104, 106) freigeschaltet hat,
und/oder
Erfassen, dass ein Benutzer angefangen hat, eine elektronische Postmitteilung auf der drahtlosen Vorrichtung (104, 106) zu verfassen,
und/oder
Erfassen, dass dem Benutzer auf einer Anzeige (120, 122) der drahtlosen Vorrichtung (104, 106) ein Passwort-Dialogfenster (118) dargestellt wurde,
und/oder
Erfassen, dass ein Benutzer angefangen hat, ein Passwort in einen Passwort-Dialogfenster (118) einzugeben, der dem Benutzer auf einer Anzeige (120, 122) der drahtlosen Vorrichtung (104, 106) dargestellt wurde,
und/oder
Erfassen, dass ein Benutzer die drahtlose Vorrichtung (104) aus einer Transportbox (112) der drahtlosen Vorrichtung (104) entnommen hat.

3. Verfahren, das einem drahtlosen Smartcard-Lesegerät (102) ermöglicht, Batteriestrom zu sparen, wobei das Verfahren Folgendes umfasst:
Erfassen eines oder mehrerer Zustände bei einer drahtlosen Vorrichtung (104, 106), die anzeigen, dass eine Kommunikation von Daten zwischen der drahtlosen Vorrichtung (104, 106) und dem drahtlosen Smartcard-Lesegerät (102) über eine drahtlose Kommunikationsverbindung (108, 110) wahrscheinlich nicht innnerhalb eines spezifizierten Zeitraums stattfinden wird; und
Veranlassen, dass die drahtlose Vorrichtung (104, 106) über die Verbindung (108, 110) eine Deaktivierungsmitteilung zu dem drahtlosen Smartcard-Lesegerät (102) sendet, um das drahtlose Smartcard-Lesegerät (102) anzuweisen, in einen Modus mit geringem Stromverbrauch einzutreten.

4. Verfahren nach Anspruch 3, wobei das Erfassen des einen oder der mehreren Zustände Folgendes umfasst:
Erfassen, dass die drahtlose Vorrichtung (104, 106) verriegelt wurde oder gerade verriegelt wird,
und/oder
Erfassen, dass ein Benutzer die drahtlose Vorrichtung (104) in einer Transportbox (112) der drahtlosen Vorrichtung (104) befestigt hat.

5. Verfahren, um ein drahtloses Smartcard-Lesegerät (102) für den Empfang einer bevorstehenden Kommunikation von Daten bereit zu machen, wobei das Verfahren Folgendes umfasst:
Empfangen einer Aktivierungsmitteilung von einer drahtlosen Vorrichtung (104, 106); und
bei Empfang der Aktivierungsmitteilung durch das drahtlose Smartcard-Lesegerät (102) Eintreten eines Zustands mit höherem Stromverbrauch in dem drahtlosen Smartcard-Lesegerät (102) für die Dauer einer Zeitbegrenzungsspanne, wenn sich das drahtlose Smartcard-Lesegerät (102) in einem Zustand mit geringem Stromverbrauch befindet, und ansonsten mindestens bis zum Ablauf der Zeitbegrenzungsspanne kein Eintreten des Zustands mit geringem Stromverbrauch in dem drahtlosen Smartcard-Lesegerät (102).

6. Verfahren nach Anspruch 5, wobei das drahtlose Smartcard-Lesegerät (102) eine Bluetooth®-Vorrichtung, der Zustand mit geringem Stromverbrauch ein *Schnupper-Modus* und der Zustand mit höherem Stromverbrauch ein *Aktiv-Modus* ist.

7. Vorrichtung (104, 106), die Folgendes umfasst:
eine drahtlose Kommunikationsschnittstelle (514, 524);
einen Prozessor (516, 526), der mit der drahtlosen Kommunikationsschnittstelle (514, 524) gekoppelt ist; und
einen Speicher (518, 528), der mit dem Prozessor (516, 526) gekoppelt ist, wobei der Speicher (518, 528) so ausgelegt ist, dass er ein ausführbares Code-Mittel (519, 529) speichert, das, wenn es von dem Prozessor (516, 526) ausgeführt wird, so ausgelegt ist, dass es einen oder mehrere Zustände erfasst, die anzeigen, dass eine Kommunikation von Daten zwischen der Vorrichtung (104, 106) und einem drahtlosen Smartcard-Lesegerät (102) über eine drahtlose Kommunikationsverbindung (108, 110) bevorsteht, und über die Verbindung (108, 110) und die drahtlose Kommunikationsschnittstelle (514, 524) eine Aktivierungsmitteilung zu dem drahtlosen Smartcard-Lesegerät (102) sendet, um das drahtlose Smartcard-Lesegerät (102) anzuweisen, für die Kommunikation bereit zu sein.

8. Smartcard-Lesegerät (102), das Folgendes umfasst:
eine drahtlose Kommunikationsschnittstelle (504), durch die das Smartcard-Lesegerät (102) eine Aktivierungsmitteilung von einer drahtlosen Vorrichtung (104, 106) empfangen kann;
einen Prozessor (506), der mit der drahtlosen Kommunikationsschnittstelle (504) gekoppelt ist; und
einen Speicher (508), der mit dem Prozessor (506) gekoppelt ist, wobei der Speicher dafür ausgelegt ist, ein ausführbares Codemittel (509) zu speichern, das, wenn es von dem Prozessor (506) ausgeführt wird, dafür ausgelegt ist, das Smartcard-Lesegerät (102) zu veranlassen, in einen Zustand mit höherem Stromverbrauch einzutreten, wenn sich das Smartcard-Lesegerät (102) bei Empfang der Aktivierungsmitteilung in einem Zustand mit geringem Stromverbrauch befindet.

9. Smartcard-Lesegerät (102) nach Anspruch 8, wobei die drahtlose Kommunikationsschnittstelle mit einem Bluetooth®-Kommunikationsprotokoll kompatibel ist.

10. Smartcard-Lesegerät (102) nach Anspruch 9, wobei der Zustand mit geringem Stromverbrauch ein *Schnupper-Modus* und der Zustand mit höherem Stromverbrauch ein *Aktiv-Modus* ist.

11. Smartcard-Lesegerät (102) nach Anspruch 8, wobei die drahtlose Kommunikationsschnittstelle mit einem ZigBee™-Kommunikationsprotokoll und/oder einem Hochfrequenzidentifikationskommunikationsprotokoll (RFID-Kommunikationsprotokoll) und/oder einem Ultra-Breitband-Kommunikationsprotokoll (UWB-Kommunikationsprotokoll) und/oder einem oder mehreren IEEE 802.11-Kommunikationsprotokollen kompatibel ist.

12. Computerlesbares Medium (518), das Programmcodemittel umfasst, welche, wenn sie von einem Prozessor (516) einer drahtlosen Computervorrichtung (104, 106) ausgeführt werden, diesen veranlassen, das Verfahren nach Anspruch 1 oder Anspruch 2 oder das Verfahren nach Anspruch 3 oder Anspruch 4 auszuführen.

13. Computerlesbares Medium (508), das Programmcodemittel umfasst, welche, wenn sie von einem Prozessor (506) eines Smartcard-Lesegeräts (102) ausgeführt werden, diesen veranlassen, das Verfahren nach Anspruch 5 oder Anspruch 6 auszuführen.

## Revendications

1. Procédé permettant d'améliorer la réactivité d'un lecteur de carte à puces sans fil (102), le procédé comprenant les étapes suivantes :
détection, au niveau d'un dispositif sans fil (104, 106), d'une ou plusieurs conditions indiquant qu'une communication de données entre ledit dispositif sans fil (104, 106) et ledit lecteur de carte à puces sans fil (102) par l'intermédiaire d'une liaison de communication sans fil (108, 110) est imminente ; et
envoi, par ledit dispositif sans fil (104, 106), d'une alerte d'activation par l'intermédiaire de ladite liaison (108, 110) audit lecteur de carte à puces sans fil (102) commandant audit lecteur de carte à puces sans fil (102) de se préparer à l'arrivée de ladite communication.

2. Procédé selon la revendication 1, dans lequel la détection d'une ou plusieurs conditions comprend les étapes suivantes :
détection du déverrouillage dudit dispositif sans fil (104, 106) par un utilisateur,
et/ou
détection du début de la composition d'un message de courrier électronique sur ledit dispositif sans fil (104, 106) par un utilisateur,
et/ou
détection de l'affichage d'une boîte de dialogue de mot de passe (118) à l'attention dudit utilisateur sur un écran (120, 122) dudit dispositif sans fil (104, 106),
et/ou
détection du début de la saisie, par un utilisateur, d'un mot de passe dans une boîte de dialogue de mot de passe (118) affichée à l'attention dudit utilisateur sur un écran (120, 122) dudit dispositif sans fil (104, 106),
et/ou
détection du retrait, par un utilisateur, dudit dispositif sans fil (104) hors d'un étui de transport (112) dudit dispositif sans fil (104).

3. Procédé permettant à un lecteur de carte à puces sans fil (102) d'économiser une batterie, le procédé comprenant les étapes suivantes :
détection, au niveau d'un dispositif sans fil (104, 106), d'une ou plusieurs conditions indiquant qu'il est peu probable qu'une communication de données entre ledit dispositif sans fil (104, 106) et ledit lecteur de carte à puces sans fil (102) par l'intermédiaire d'une liaison de communication sans fil (108, 110) se produise au cours d'une durée spécifiée ; et
envoi, par ledit dispositif sans fil (104, 106), d'une alerte de désactivation par l'intermédiaire de ladite liaison (108, 110) audit lecteur de carte à puces sans fil (102) commandant audit lecteur de carte à puces sans fil (102) de se mettre en mode de faible consommation.

4. Procédé selon la revendication 3, dans lequel la détection de ladite une ou desdites plusieurs conditions comprend les étapes suivantes :
détection du fait que ledit dispositif sans fil (104, 106) a été verrouillé ou est sur le point d'être verrouillé,
et/ou
détection de la fixation, par un utilisateur, dudit dispositif sans fil (104) à un étui de transport (112) dudit dispositif sans fil (104).

5. Procédé permettant de préparer un lecteur de carte à puces sans fil (102) à recevoir une communication de données imminente, le procédé comprenant les étapes suivantes :
réception d'une alerte d'activation en provenance d'un dispositif sans fil (104, 106) ; et
à la réception de ladite alerte d'activation par ledit lecteur de carte à puces sans fil (102), activation d'un mode de consommation plus élevée dans ledit lecteur de carte à puces sans fil (102) pendant un délai de temporisation si ledit lecteur de carte à puces sans fil (102) se trouve en mode de faible consommation et, dans le cas contraire, non-activation dudit mode de faible consommation dans ledit lecteur de carte à puces sans fil (102) du moins jusqu'à ce que ledit délai de temporisation ait expiré.

6. Procédé selon la revendication 5, dans lequel ledit lecteur de carte à puces sans fil (102) est un dispositif Bluetooth®, ledit mode de faible consommation est le *mode Sniff* et ledit mode de consommation plus élevée est le *mode Actif.*

7. Dispositif (104, 106) comprenant :
une interface de communication sans fil (514, 524);
un processeur (516, 526) associé à ladite interface de communication sans fil (514, 524); et
une mémoire (518, 528) associée audit processeur (516, 526), ladite mémoire (518, 528) pouvant stocker des moyens de code pouvant être exécutés (519, 529) qui, lorsqu'ils sont exécutés par ledit processeur (516, 526), peuvent détecter une ou plusieurs conditions indiquant qu'une communication de données entre ledit dispositif (104, 106) et un lecteur de carte à puces sans fil (102) par l'intermédiaire d'une liaison de communication sans fil (108, 110) est imminente, et qui envoient une alerte d'activation audit lecteur de carte à puces sans fil (102) par l'intermédiaire de ladite liaison (108, 110) et de ladite interface de communication sans fil (514, 524) commandant audit lecteur de carte à puces sans fil (102) de se préparer à l'arrivée de ladite communication.

8. Lecteur de carte à puces (102), comprenant :
une interface de communication sans fil (504) par l'intermédiaire de laquelle ledit lecteur de carte à puces (102) peut recevoir une alerte d'activation en provenance d'un dispositif sans fil (104, 106) ;
un processeur (506) associé à ladite interface de communication sans fil (504) ; et
une mémoire (508) associée audit processeur (506), ladite mémoire pouvant stocker des moyens de code pouvant être exécutés (509) qui, lorsqu'ils sont exécutés par ledit processeur (506), peuvent amener ledit lecteur de carte à puces (102) à activer un mode de consommation plus élevée si ledit lecteur de carte à puces (102) se trouve en mode de faible consommation à la réception de ladite alerte d'activation.

9. Lecteur de carte à puces (102) selon la revendication 8, dans lequel ladite interface de communication sans fil est compatible avec un protocole de communication Bluetooth®.

10. Lecteur de carte à puces (102) selon la revendication 9, dans lequel ledit mode de faible consommation est le *mode Sniff* et ledit mode de consommation plus élevée est le *mode Actif.*

11. Lecteur de carte à puces (102) selon la revendication 8, dans lequel ladite interface de communication sans fil est compatible avec un protocole de communication ZigBee™ et/ou un protocole de communication d'identification par radiofréquence (RFID) et/ou un protocole de communication ultra large bande (UWB) et/ou un ou plusieurs protocoles de communication IEEE 802.11.

12. Support lisible par ordinateur (518) intégrant des moyens de code de programme qui, lorsqu'ils sont exécutés par un processeur (516) d'un dispositif informatique sans fil (104, 106), amènent celui-ci à mettre en oeuvre le procédé selon la revendication 1 ou 2 ou le procédé selon la revendication 3 ou 4.

13. Support lisible par ordinateur (508) intégrant des moyens de code de programme qui, lorsqu'ils sont exécutés par un processeur (506) d'un lecteur de carte à puces (102), amènent celui-ci à mettre en oeuvre le procédé selon la revendication 5 ou 6.
